# EUROPEAN PATENT APPLICATION

(11) **EP 4 624 078 A1**
(43) Date of publication of application: **01.10.2025**
(21) Application number: 24167132.0
(22) Date of filing: 28.03.2024
(51) Int. Cl.: B23B 29/24, B23B 1/00, B23B 27/00

(54) **A TURNING TOOL FOR METAL CUTTING**

(71) Applicant: AB Sandvik Coromant, 811 81 Sandviken (SE)
(72) Inventor: WIKBLAD, Krister, 811 81 Sandviken (SE); LÖF, Ronnie, 811 81 Sandviken (SE); WICKSTRÖM, David, 811 81 Sandviken (SE)
(74) Representative: Sandvik

(57) **Abstract**

The present invention relates to a turning tool (1) comprising a tool body (2). The tool body (2) includes a front end (4) and an opposite rear end (3), a peripherical surface (9) connecting the front end (4) and the rear end (3), and a longitudinal central axis (A1) extending from the front end (4) to the rear end (3). The turning tool (1) comprises a first cutting insert (100), which is arranged at the front end (4), wherein the first cutting insert (100) is a roughing cutting insert, and wherein the first cutting insert (100) has a first nose cutting edge (105) comprising a first radially distal point (110). The turning tool (1) further comprises a second cutting insert (200), which is arranged at the front end (4), wherein the second cutting insert is a profiling cutting insert, and wherein the second cutting insert (200) has a second nose cutting edge (206) comprising a second radially distal point (210). As seen in the longitudinal direction, the first radially distal point (110) is positioned closer to the front end (4) than the second radially distal point (210).

## Description

### TECHNICAL FIELD

The invention relates to a turning tool for metal cutting. More specifically the present invention belongs to the field of turning.

### BACKGROUND

EP 3 456 442 A1 relates to a turning tool for internal turning of a metal work piece. The inventors have found that the state of the art has some drawbacks, and that there is a need for a further improved turning tool. Especially, the inventors have found that a disadvantage with the turning tool disclosed in EP 3 456 442 A1 is that the turning tool has limitations for use in some applications. Also, there is a need to further reduce vibrations of the turning tool during metal cutting operations.

### SUMMARY

It is an object of the present invention to at least partly obviate the above-mentioned problems. This object is achieved according to the invention by means of a turning tool as defined in claim 1.

An inventive turning tool comprises a tool body, the tool body including:
- a front end and an opposite rear end;
- a peripherical surface connecting the front end and the rear end;
- a longitudinal central axis extending from the front end to the rear end,
the turning tool further comprises:
- a first cutting insert, which is arranged at the front end, wherein the first cutting insert is a roughing cutting insert, and wherein the first cutting insert has a first nose cutting edge comprising a first radially distal point;
- a second cutting insert, which is arranged at the front end, wherein the second cutting insert is a profiling cutting insert, and wherein the second cutting insert has a second nose cutting edge comprising a second radially distal point;
- wherein, as seen in the longitudinal direction, the first radially distal point is positioned closer to the front end than the second radially distal point.

In other words, as seen in the longitudinal direction, the first radially distal point is positioned further away from the rear end than the second radially distal point.

Such a turning tool is particularly suitable for internal turning. Such a turning tool is particularly suitable for use when machining a hole of a metal workpiece, which hole has an initial entrance diameter which is shorter than, as seen in a radial direction, a distance from the first radially distal point to the second radially distal point. Such a turning tool is particularly suitable for use when machining a hole which is a blind hole being deeper than a maximal possible hole insertion length of the turning tool, or which hole is a through hole. Due to its design machining with the roughing insert may be performed when the initial entrance diameter is shorter than, as seen in a radial direction, a distance from the first radially distal point to the second radially distal point. Further, machining of the hole may be performed in more cases than the turning tool depicted with reference to EP 3 456 442 A1 because the first cutting insert may form a clearance space between the second radially distal point and a circumferential inner surface of the hole. The inventive turning tool is particularly suitable for internal turning of a hole having a relatively small diameter.

The turning tool is arranged for effective metal cutting by the first cutting insert and arranged for forming a predetermined surface finish by the second cutting insert.

The tool body may be designed with a relatively large diameter. Hereby vibrations during turning operations may be reduced. Also, a need for applied dampers of the turning tool is reduced or eliminated.

By providing a tool body having a relatively large diameter the tool body may be longer compared to known turning tools.

By providing two different cutting inserts at the front end of the turning tool there is no need for tool change which in turn provide high machine utilization. Advantageously high productivity and longer tool life is achieved.

According to at least one embodiment, the first nose cutting edge is formed to remove metal at a cutting depth of 0,25-4,0 mm. The first nose cutting edge and associated cutting edges are formed to cut metal so as to prepare for subsequent metal cutting by the second cutting insert. By first using a roughing cutting insert effective removal of metal is achieved. After said effective metal removal machining by use of the profiling cutting insert is performed so as to achieve a desired surface finish.

According to at least one embodiment, the first nose cutting edge has a first nose angle, which is 30-160 °.

The first cutting insert may be indexable 2 times. The first cutting insert is hereby 180 ° symmetrical. According to an example the first cutting insert may be indexable 3 or 4 times. The first cutting insert may be an S-insert (having a cutting nose angle of 90 °). The first cutting insert may be a T-insert (having a cutting nose angle of 90 °). The first nose cutting edge may be associated with a wiper portion of the first cutting insert. Hereby the turning tool is versatile. A number of different profiling cutting inserts may be used. A proper second cutting insert may be used according a specific application or metal workpiece to be machined.

According to at least one embodiment, the second nose cutting edge is formed to remove metal at a cutting depth of 0,1-3,0 mm. Hereby a machined inner surface of the hole may get dimensions and a surface finish according to predetermined criterion in a fast and accurate way.

According to an example the second cutting insert is a parting cutting insert. According to an example the second cutting insert is a grooving cutting insert.

According to at least one embodiment, the second nose cutting edge has a second nose angle, which is 35-60 °.

The second cutting insert may be indexable 2 times. The second cutting insert is hereby 180 °symmetrical. According to an example the second cutting insert may be indexable 3 or 4 times. The second cutting insert may be a T-insert (having a cutting nose angle of 60 °). The second cutting insert may be a V-insert (having a cutting nose angle of 35 °). The second cutting insert may be a D-insert (having a cutting nose angle of 55 °). The second nose cutting edge may be associated with a wiper portion of the second cutting insert. Hereby the turning tool is versatile. A number of different profiling cutting inserts may be used. A proper second cutting insert may be used according a specific application or specific metal workpiece to be machined.

According to at least one embodiment, a first distance from the first radially distal point to the longitudinal central axis is shorter than a second distance from the second radially distal point to the longitudinal central axis. This is due to a preferred design and positioning of the second cutting insert. Advantageously the first cutting insert is active during machining so as to cut metal which in turn allow space for the second cutting insert within the hole. It is extra important to arrange the first cutting insert in front of the second cutting insert when the second radially distal point is at a relatively large distance from the central longitudinal axis of the turning tool.

According to one example the first distance D1 is 6-20 mm. According to one example the second distance D2 is 10-25 mm.

According to at least one embodiment, a third distance from the first radially distal point to the second radially distal point, as seen in the longitudinal direction, is 1-20 mm, preferably 5-10 mm. The third distance may be longer than 10 mm. The third distance is a distance which is sufficient to allow the second nose cutting edge of the second cutting insert to go free during machining operations of the metal workpiece.

According to at least one embodiment, the first radially distal point has an associated first rake face. The second radially distal point has an associated second rake face. The first rake face of the first cutting insert and the second rake face of the second cutting insert are facing different directions. Hereby the rotational direction of the metal workpiece does not have to be changed between machining with the first cutting insert and machining with the second cutting insert. Thus, a time-efficient machining operation is provided.

According to at least one embodiment the first radially distal point has an associated first rake face and the second radially distal point has an associated second rake face. The first rake face of the first cutting insert and the second rake face of the second cutting insert are facing directly opposite directions. Hereby the turning tool is arranged to hold a first cutting insert being a positive insert and to hold a second cutting insert being a positive insert. According to this example a first central plane of the first cutting insert, which first central plane is located between a top surface and a bottom surface thereof, and a second central plane of the second cutting insert, which second central plane is located between a top surface and a bottom surface thereof, are arranged in parallel. This arrangement is advantageous when the first cutting insert and the second cutting insert are positive inserts.

According to one example, the first rake face of the first cutting insert and the second rake face of the second cutting insert are oriented at an angle of 1-20 °, preferably 5-15 °. This arrangement is advantageous considering chip control when the first cutting insert and the second cutting insert are positive inserts.

According to at least one embodiment the first radially distal point has an associated first rake face and the second radially distal point has an associated second rake face. The first rake face of the first cutting insert and the second rake face of the second cutting insert are facing different directions. Hereby the turning tool is arranged to hold a first cutting insert being a negative insert and to hold a second cutting insert being a negative insert. According to this example the first central plane of the first cutting insert, which first central plane is located between a top surface and a bottom surface thereof, and the second central plane of the second cutting insert, which second central plane is located between a top surface and a bottom surface thereof, are arranged at an angle 1-20 °, preferably 5-15 °. This arrangement is advantageous considering chip control when the first cutting insert and the second cutting insert are negative inserts co.

According to at least one embodiment the turning tool comprises:
- a first insert seat accommodating the first cutting insert, wherein a first nose cutting edge of the first cutting insert is separating and connecting the first forward cutting edge and a first rearward cutting edge;
- a second insert seat accommodating the second cutting insert, wherein a second nose cutting edge of the second cutting insert is separating and connecting a second forward cutting edge and a second rearward cutting edge.

By arranging the first cutting insert in the first insert seat the first cutting insert can be fixedly secured by any suitable first clamping means. The first clamping means is arranged to hold the first cutting insert in the first insert seat. The first clamping means may comprise a screw being arranged through the first cutting insert and into a hole of the tool body. The first forward cutting edge is arranged for metal cutting in one direction. The first rearward cutting edge is arranged for metal cutting in an opposite direction. Hereby a versatile turning tool is provided.

By arranging the second cutting insert in the second insert seat the second cutting insert can be fixedly secured by any suitable second clamping means. The second clamping means is arranged to hold the second cutting insert in the second insert seat. The second clamping means may comprise a screw being arranged through the second cutting insert and into a hole of the tool body. The second forward cutting edge is arranged for metal cutting in one direction. The second rearward cutting edge is arranged for metal cutting in an opposite direction. Hereby a versatile turning tool is provided.

According to at least one embodiment, the first cutting insert has a first rearward cutting edge forming an acute first back clearance angle, which is 4-40 °. The first cutting insert has a first forward cutting edge forming an acute first entering angle, which is 4 - 40 °. Hereby relatively large cutting depths may be used which provides effective metal cutting processes. By using a relatively low entering angle increased chip control is achieved as well as longer insert life compared to traditional turning.

According to at least one embodiment, the second cutting insert has a second forward cutting edge forming an obtuse second back clearance angle, which is 91 - 120 °. The second cutting insert has a second rearward cutting edge forming an acute second entering angle, which is 4 - 80 °. By using a relatively low entering angle an improved surface finish may be achieved.

An inventive machining method comprises the steps of:
- providing the turning tool;
- providing a metal workpiece comprising a hole, which hole has a longitudinal central axis and an inner circumferential surface;
- arranging the longitudinal central axis of the turning tool and the longitudinal central axis of the hole parallel, or substantially parallel;
- rotating the metal workpiece in a rotational direction around the rotational axis thereof;
- machining the hole, comprising the steps of:
- setting a first cutting depth of the first cutting insert;
- forming a first inner surface of the hole by moving the first nose cutting edge of the first cutting insert in a first feed direction over the inner circumferential surface at the set first cutting depth.

By providing the roughing insert ahead of the profiling insert on the turning tool a number of advantages is achieved regarding internal turning of the metal workpiece. One advantage is that effective chip removal may be achieved by a roughing insert in case an entrance diameter of the hole is shorter than the total distance between the first radially distal point and the second radially distal point, as seen in the radial direction.

One advantage is that vibrations of the turning tool during turning operations may be reduced because the turning tool may be designed with a rather wide tool body diameter. Hereby the turning tool may be subjected to less deflection as well.

According to at least one embodiment, the step of providing the metal workpiece comprises:
- providing a metal work piece with a hole, wherein the hole has an initial entrance diameter which is shorter than, as seen in a radial direction, a distance from the first radially distal point to the second radially distal point. Advantageously the first cutting insert may be used to go into cut in the hole so as to broaden the hole entrance diameter and give enough clearance space for the second cutting insert to enter the hole without being in contact with first inner surface or an end surface of the metal workpiece.

According to at least one embodiment, the step of machining the hole comprises:
- forming a clearance space between the second radially distal point and the first inner surface by setting the first cutting depth of the first cutting insert such that a clearance space between the second radially distal point and the first inner surface is formed during forming the first inner surface. Advantageously the first cutting insert may be used to machine the hole, at said set first cutting depth, so as to widen the hole diameter and give enough clearance space for the second cutting insert so as not to be in contact with the formed first inner surface.

According to at least one embodiment, the step of machining the hole comprises:
- bringing the second nose cutting edge to an active position by moving the turning tool in a second feed direction, which second feed direction is inclined in relation to the rotational axis. The second feed direction may be a linear motion. Alternatively the second feed direction may be a curved motion , such as along a circle segment. Hereby a time-effective change of active cutting insert is achieved. By a short movement of the turning tool, turning by means of the first cutting insert is shifted to turning by means of the second cutting insert.

According to at least one embodiment, the step of machining the hole comprises:
- setting a second cutting depth of the second cutting insert, wherein the second cutting depth is shorter than the first set cutting depth of the first cutting insert;
- forming a second inner surface of the hole by moving the second nose cutting edge of the second cutting insert over the first inner surface in a third feed direction, at the set second cutting depth, wherein the third feed direction is opposite to the first feed direction. Hereby a machined first inner surface of the hole may get dimensions and a surface finish according to predetermined criterion in a fast and accurate way.

According to at least one embodiment the step of machining the hole comprises:
- setting a first cutting speed for machining with the first cutting insert at the set first cutting depth; and
- setting a second cutting speed for machining with the second cutting insert at the set second cutting depth.

The first set cutting speed may be 200-300 m/min. A first feed rate of the first cutting insert 100 may be 0,05-1,5 mm/r.

The second set cutting speed may be 200-300 m/min. A second feed rate of the second cutting insert 200 may be 0,5-1,2 mm/r.

Hereby effective metal cutting as well as a predetermined surface finish may be achieved.

According to at least one embodiment, the step of providing the metal workpiece comprises:
- providing a metal workpiece with the hole, which hole is a blind hole being deeper than a maximal possible hole insertion length of the turning tool, or which hole is a through hole. Hereby the first cutting insert may machine the inner surface of the hole without reaching a bottom of the hole. The first cutting insert may thus in some applications be used for metal cutting to a larger extent, i.e. longer movement into the hole, compared to prior art when the profiling insert is positioned ahead of the roughing insert.

According to at least one embodiment, the method is further comprising the steps of:
- providing a computerized numerical control lathe;
- clamping the metal workpiece by the computerized numerical control lathe;
- connecting the turning tool to a machine interface of the computerized numerical control lathe.

According to at least one embodiment the machining method comprises the steps of:
- positioning the turning tool such that a distance from the second radially distal point to the first inner surface is shorter than a distance from the first radially distal point to the first inner surface;
- moving the turning tool in a fourth feed direction, opposite to or substantially opposite to the first feed direction, such that the turning tool is pulling chips out of the hole; and
- stopping the movement of the turning tool when the turning tool is completely outside the hole by an axial distance.

Hereby effective removal of chips from the hole is achieved. This step may be performed more than once for increasing the amount of chips removed from the hole. Removal of chips from the hole may also, at least partly, be performed by means of coolant fluid supplied by a coolant supply system of the turning tool.

According to an embodiment, a computer program having instructions which when executed by the computer numerical control lathe cause the computer numerical control lathe to perform the method. Said computer program comprises preprogrammed sequences of machine control commands which can be executed by a CNC-lathe to perform the machining method according to an embodiment. According to an embodiment, a computer readable medium having stored thereon such a computer program. The computer readable medium, which carries the computer program, may be in the form of any computer readable memory which carries data, such as e.g. a CD-ROM disc. According to an embodiment, a data stream which is representative of such a computer program. Said data stream is a sequence of digitally encoded coherent signals used to transmit information.

A "turning tool" should be understood as a cutting tool used for machining a rotating workpiece. Such tool, in the context of machining the internal surface of a hole in a rotating workpiece, is sometimes also referred to as a boring bar. The central axis of such turning tool is parallel, but usually not coaxial, with the rotation axis of the workpiece, and the turning tool can be moved radially within the hole to engage the surface of the workpiece. Thereby, in contrast to drilling or boring using rotating tools, a varying internal profile of the hole can be machined by changing the radial displacement between the turning tool and the rotation axis of the workpiece. The turning tool is connectable to a machine tool, for example a CNC lathe or other machine tool suitable for turning operations.

### BREIF DESCRIPTION OF THE FIGURES

The present invention will now be explained in more detail by a description of embodiments of the invention and by reference to the accompanying drawings.
- Fig. 1: is a top view of a turning tool according to a first embodiment, comprising a first and a second cutting insert.
- Fig. 2: is a front view of the turning tool in Fig. 1.
- Fig. 3: is a detailed perspective view of the turning tool in Fig. 1.
- Fig. 4: is a further detailed perspective view of the turning tool in Fig. 1.
- Fig. 5: is a detailed top view of the turning tool in Fig. 1.
- Fig. 6: is a detailed perspective view of the turning tool in Fig. 1.
- Fig. 7: is a further detailed perspective view of the turning tool in Fig. 1.
- Fig. 8: is a detailed bottom view of the turning tool in Fig. 1.
- Fig. 9: is a top view of the first cutting insert in Fig. 1.
- Fig. 10: is a side view of the first cutting insert in Fig. 9.
- Fig. 11: is a top view of the second cutting insert in Fig. 1.
- Fig. 12: is a side view a of the second turning insert in Fig. 11.
- Fig. 13a: is a schematic view of a machining method moving the turning tool in a first feed direction.
- Fig. 13b: is a schematic view of a machining method moving the turning tool in a second feed direction.
- Fig. 13c: is a schematic view of a machining method moving the turning tool in a third feed direction.
- Fig. 13d: is a schematic view of a machining method using the turning tool, showing the end position after movement of the turning tool in the fourth feed direction.

### DETAILED DESCRIPTION OF THE FIGURES

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

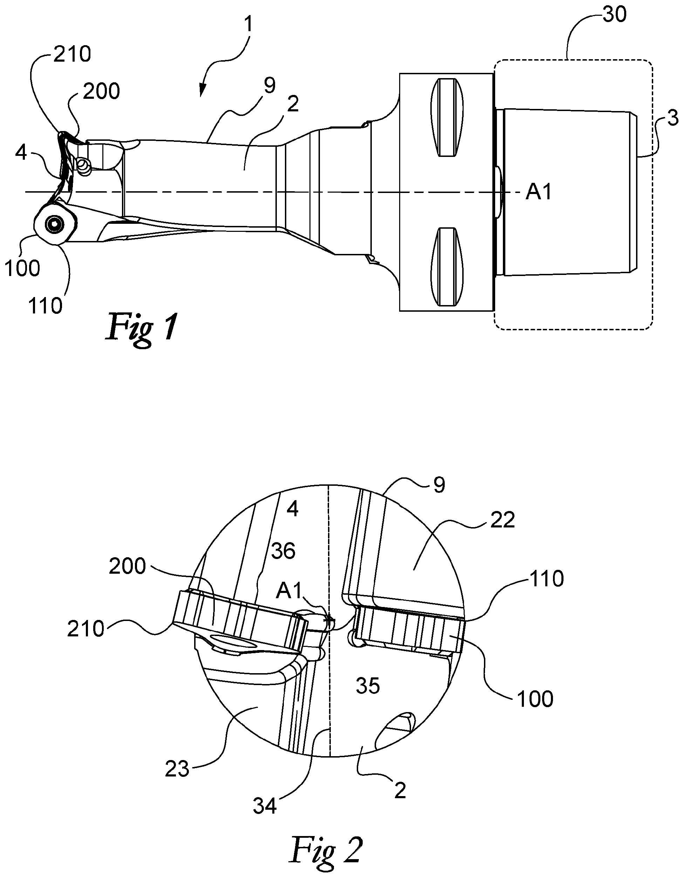

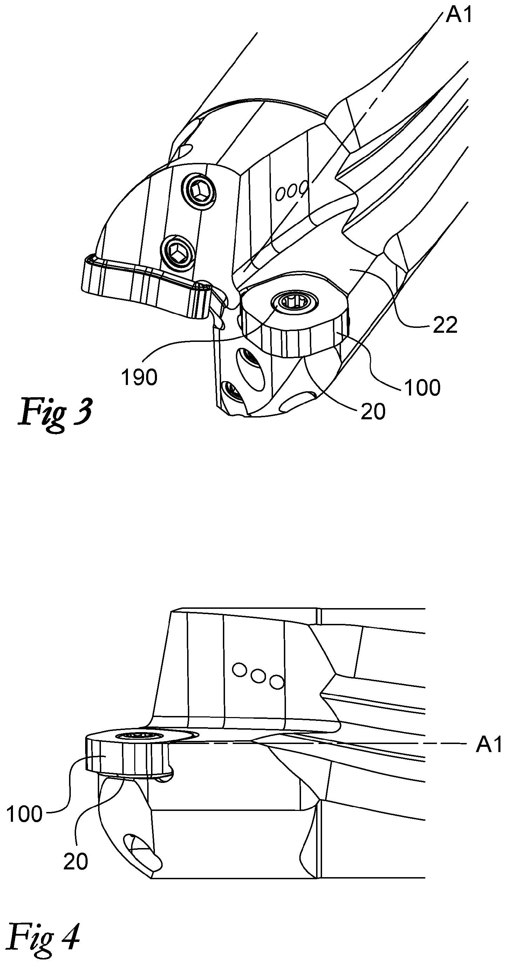

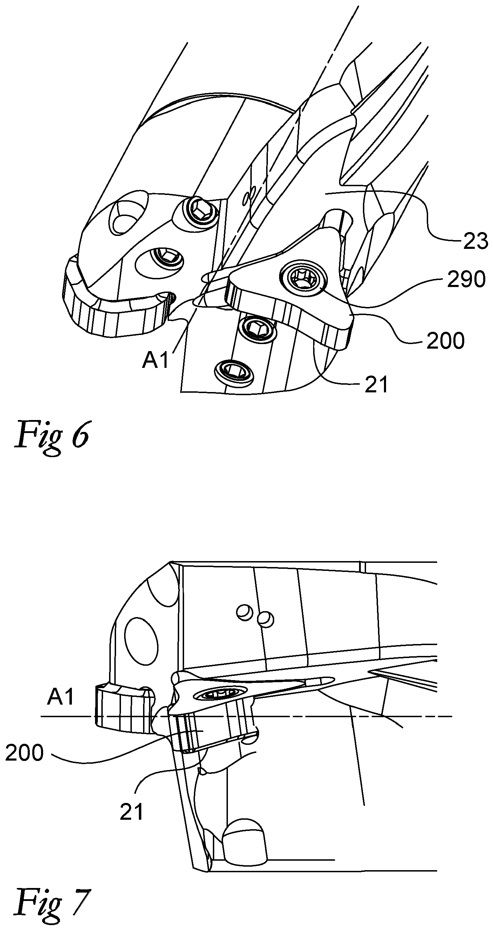

Reference is made to Figs. 1 - 8, which show a turning tool 1.

The turning tool 1 comprises a rear end 3, an opposite forward end 4 and a longitudinal central axis A1 extending therebetween. The longitudinal central axis A1 is extending from the forward end 4 to the rear end 3. The forward end 4 is also referred to as a first end of the turning tool 1. The rear end 3 is also referred to as a second end of the turning tool 1.

The rear end 3 is clamped to a machine interface 30 of a machine tool, such as a numerical control lathe (not shown). The turning tool 1 comprises a tool body 2, a first turning insert 100 and a second turning insert 200. The first turning insert 100 is also referred to as a first cutting insert. The second turning insert 200 is also referred to as a second cutting insert. The tool body 2 comprises an external peripheral surface 9 which comprises a portion which is circular or substantially circular in cross sections perpendicular to the longitudinal central axis A1. The tool body 2 comprises a first insert seat 20 and an opposite second insert seat 21, a first chip pocket 22, adjacent to the first insert seat 20, and an opposite second chip pocket 23, adjacent to the second insert seat 21.

The first and second insert seats 20, 21 are spaced apart. The first and second chip pockets 22, 23 are spaced apart. The first and second chip pockets 22, 23 opens towards the forward end 4. The first turning insert 100 is located in the first insert seat 20. The second turning insert 200 is located in the second insert seat 21. The first turning insert 100 is clampable in the first insert seat 20 by clamping means in the form of a screw 190. The second turning insert 200 is clampable in the second insert seat 21 by clamping means in the form of a screw 290. The screw 190 is engageable in a threaded hole (not shown) in the first insert seat 20. The screw 290 is engageable in a threaded hole (not shown) in the second insert seat 21. The first turning insert 100 and the second turning insert 200 may be held by any suitable clamping means, such as a clamp. However, by holding the first turning insert 100 and the second turning insert 200 by means of respective screws a minimal protrusion, in a radially outward direction, of the clamping means is achieved. This is desirable when it comes to internal turning, in particular when performing internal turning of a hole having a relatively small diameter.

As can be seen in e.g. Fig. 1, the first turning insert 100 and the second turning insert 200 partially overlap in the longitudinal direction as defined by the longitudinal central axis A1.

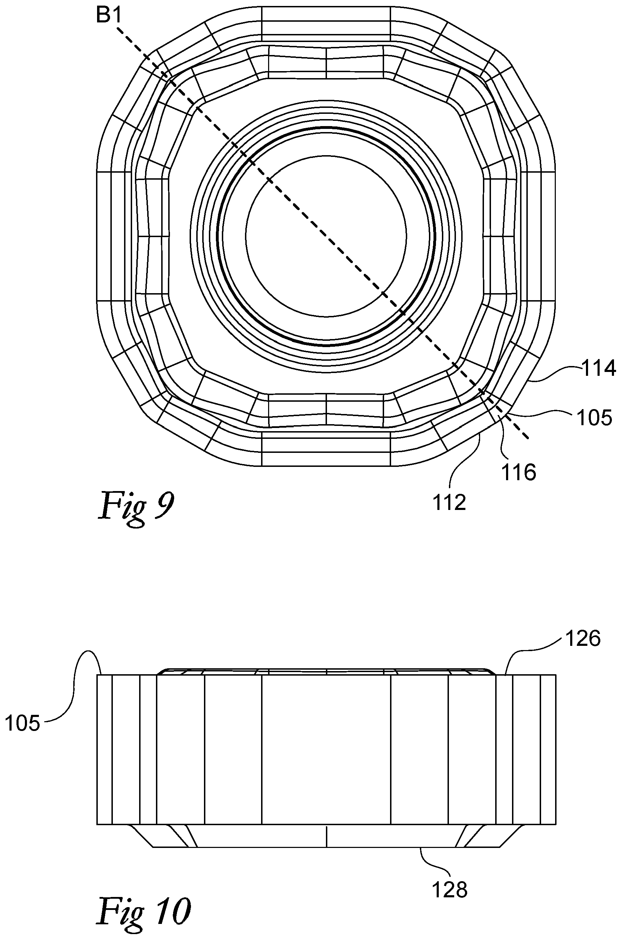

With reference to Figures 9 and 10, the first cutting insert 100 which is part of the turning tool 1 comprises a first top surface 126, comprising the first rake face 116, and an opposite first bottom surface 128, a first nose cutting edge 105, a first forward cutting edge 112 and a first rearward cutting edge 114.

The first nose cutting edge 105 comprising a first radially distal point 110, when the first cutting insert 100 is mounted in the first insert seat 20. The first nose cutting edge 105 separates and connects the first forward cutting edge 112 and the first rearward cutting edge 114, where said edges 105, 112, 114 are formed at an intersection between the first top surface 126 and a first side surface, where said first side surface connects the top and bottom surfaces 126, 128.

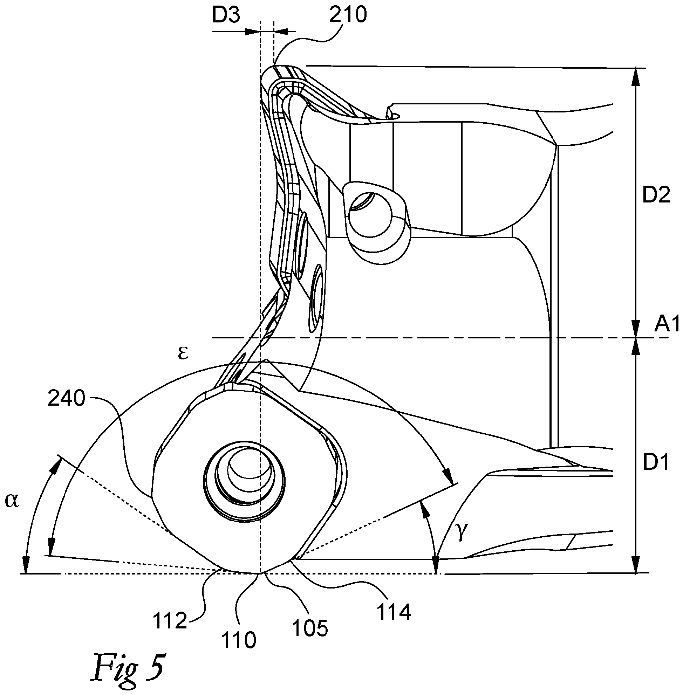

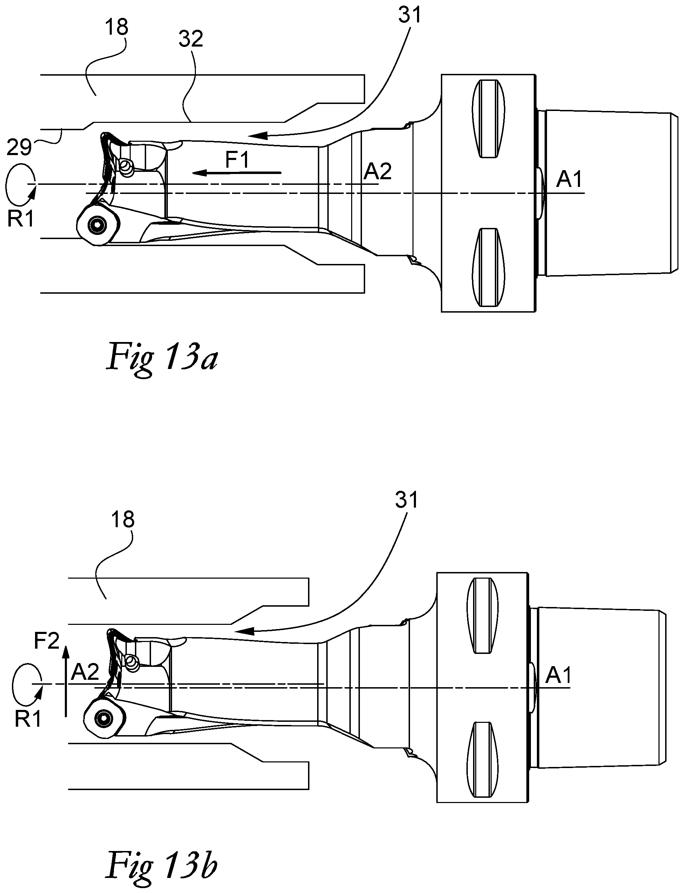

As can be seen in Fig. 5, an acute first entering angle α and an acute first back clearance angle γ are formed in longitudinal turning in a first feed direction F1 shown in Fig. 13a, and. The acute first entering angle α is preferably within the range of 4 - 40 °. The acute first back clearance angle γ is within the range of 4 - 40 °. The first nose cutting edge 105 has a first nose angle ε, preferably within the range of 30 -160°.

A first bisector B1 extend mid-way between the first forward cutting edge 112 and the first rearward cutting edge 114, as seen in Fig. 9.

As seen in Fig. 5, the first nose cutting edge 105 has a first nose angle ε, preferably within the range of 30-160 °.

A first distance D1 from the first radially distal point 110 to the longitudinal central axis A1, as seen in the radial direction, is 6-20 mm, preferably 10-15 mm.

A second distance D2 from the second radially distal point 210 to the longitudinal central axis A1, as seen in Fig. 5, is 10-25mm, preferably 15-20 mm.

A third distance D3 from the first radially distal point 110 to the second radially distal point 210, as seen in the longitudinal direction, is 1-20 mm, preferably 5-10 mm.

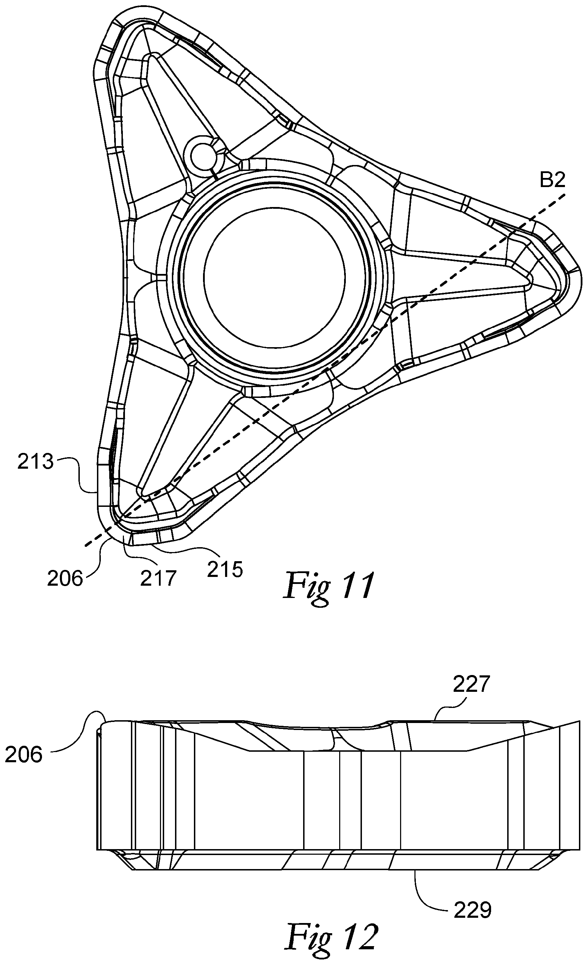

With reference to Figures 11 and 12, the second cutting insert 200 which is part of the turning tool 1 comprises a second top surface 227, comprising a second rake face 217, and an opposite second bottom surface 229. The second cutting insert 200 comprises a second nose cutting edge 206 separating and connecting a second forward cutting edge 213 and a second rearward cutting edge 215.

The second nose cutting edge 206 comprising a second radially distal point 210, when the second cutting insert 200 is mounted in the second insert seat 21. The second nose cutting edge 206 separates and connects the second forward cutting edge 213 and the second rearward cutting edge 215, where said edges 206, 213, 215 are formed at an intersection between the second top surface 227 and a first side surface, where said first side surface connects the top and bottom surfaces 227, 229.

As can be seen in e.g. Figures 1, 5 and 8, the first radially distal point 110 being positioned ahead of the second radially distal point 210.

The second forward cutting edge 213 forms an obtuse second back clearance angle β, preferably in the range of 91 - 120 °.

The second rearward cutting edge 215 forms an acute second entering angle δ, preferably in the range of 4 - 80 °.

A second bisector B2 extend mid-way between the second forward cutting edge 213 and the second rearward cutting edge 215, as seen in Fig. 11.

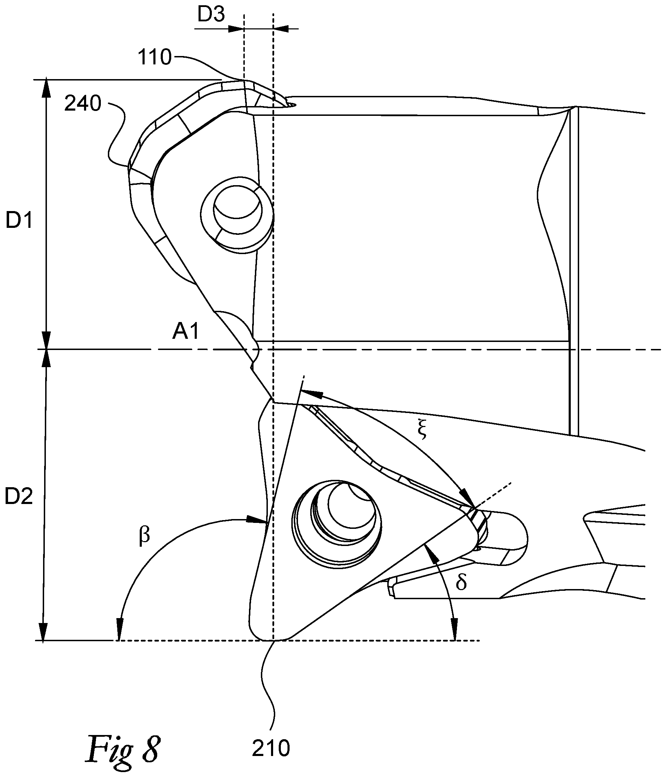

As seen in Fig. 8, the second nose cutting edge 206 has a second nose angle ζ, which is acute, and preferably within the range of 35 - 60.

As seen in Figures 5 and 8, the first cutting insert 100 comprises an axially forward distal point 240 which define the singular axially forward end point of the turning tool 1.

As seen in Fig. 2, the first and second radially distal points 110, 210 are positioned on opposite sides or substantially opposite sides relative to the longitudinal center axis A1. In a front view of the turning tool, as in Fig. 2, an angle between the first radially distal point 110 and the second radially distal point 210 is 180° +/- 20°, preferably +/- 5°.

An imaginary plane 34 is located mid-way between the first radially distal point 110 and the second radially distal point 210, dividing the turning tool 1 in two halves 35, 36, or two semicircle-like shapes, in a front view. The first radially distal point 210 is the point of one 35 of said halves of the turning tool 1 which is located at the greatest distance from the longitudinal center axis A1. The second radially distal point 210 is the point of the other one 36 of said halves of the turning tool 1 which is located at the greatest distance from the longitudinal center axis A1.

The first and second rake faces 116, 217 facing opposite or substantially opposite directions.

Attention is now drawn to Figs. 13a - 13d, which show a machining method, a turning method or a turning operation, or more specifically machining steps or sequences. In Figs. 13a - 13d, it is shown a metal workpiece 18 comprising a hole 31, which metal workpiece 18 is clamped (not shown) to the left-hand side in the figures by a computerized numerical control lathe (not shown). In Figs. 13a - 13d, the hole 31 is in the form of a through hole. The hole 31 may be a blind hole, which hole preferably is deeper than a maximal possible hole insertion length of the turning tool 1. The hole 31 has an inner circumferential surface 29. The turning tool 1 is connected to a machine interface 30 of the computerized numerical control lathe.

The metal workpiece 18 is rotatable in a rotational direction R1 about a rotational axis A2. The longitudinal axis A1 of the turning tool 1 is parallel to the rotational axis A2.

In Fig. 13a, the metal workpiece 18 rotates in the rotational direction R1 about the rotational axis A2. Machining of the hole 31 is made by moving the turning tool 1 in a first feed direction F1, parallel to the rotational axis A2, such that the first forward cutting edge 112 is active and such that a first inner surface 32 is formed by the first nose cutting edge 105. The moving of the turning tool 1 in the first feed direction F1 is such that the turning tool 1 is moved deeper into the hole 31. In other words, a distance from the forward end 4 of the turning tool 1 to the opening of the hole 31, through which opening the turning tool 1 enters the hole, is increasing.

The method comprises the step of setting a first cutting depth of the first cutting insert 100 and forming the first inner surface 32 of the hole 31 by moving the first nose cutting edge 105 of the first cutting insert 100 in a first feed direction F1 over the inner circumferential surface 29 at the set first cutting depth.

In Fig. 13a, the entry of cut starts at the opening of the hole 31. The movement of the turning tool 1 in the first feed direction F1 is a linear motion.

According to one example the hole 31 has an initial entrance diameter which is shorter than, as seen in a radial direction, a distance from the first radially distal point 110 to the second radially distal point 210. This distance is the sum of the first distance D1 and the second distance D2.

The step of machining the hole 31 comprises forming a clearance space between the second radially distal point 210 and the first inner surface 32 by setting the first cutting depth of the first cutting insert 100 such that a clearance space between the second radially distal point 210 and the first inner surface 32 is formed during forming the first inner surface 32. Hereby, by using the turning tool in such a manner contact between the second cutting insert 200 and the first inner surface 32 is avoided. The first cutting depth may be 0,25-4,0 mm.

Attention is now drawn to Fig. 13b, which show a machining step which preferably is performed after the step shown in Fig. 13a. The metal work piece 18 is rotating around the rotational axis A2. in the rotational direction R1. The machining of an inner surface of the hole 31 is made by moving the turning tool 1 in a second feed direction F2, which is inclined in relation to the rotational axis A2, such that the second nose cutting edge 206 is active, i.e. goes into cut, and such that the first nose cutting edge 105 is inactive. As seen in Fig. 15b, the second feed direction F2 is perpendicular to the rotational axis A2. More specifically, Fig. 13b show a position of the turning tool 1 before the second nose cutting edge 206 goes into cut. The movement of the turning tool 1 in the second feed direction F2 is preferably stopped at a greater diameter than the first inner surface 32. The movement of the turning tool 1 in the second feed direction F2 is preferably stopped at a position where a second set cutting depth in a third feed direction F3 is reached.

The movement of the turning tool 1 in the second feed direction F2 may be a linear motion, or alternatively a curved motion, such as along the circle segment.

Hereby the second nose cutting edge 206 is brought to an active position by moving the turning tool 1 in the second feed direction F2, which second feed direction F2 is inclined in relation to the rotational axis A2.

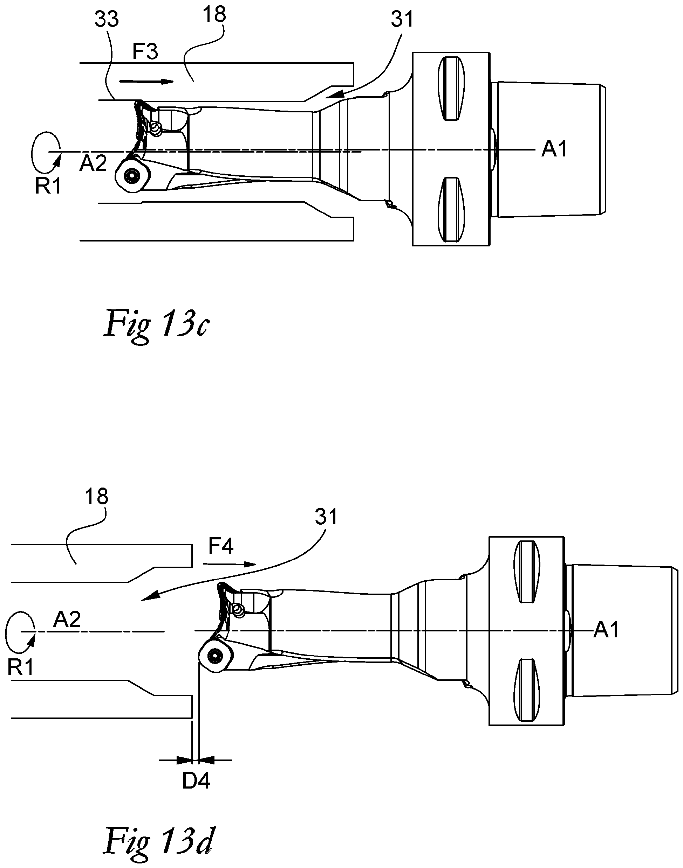

Attention is now drawn to Fig. 13c, which show a machining step which preferably is performed after the step shown in Fig. 13a, and preferably is performed after the step shown in Fig. 13b. As in Figs. 13a and 13b, the metal workpiece 18 is rotated about the rotational axis A2 in the rotational direction R1, and the longitudinal axis A1 of the turning tool 1 is parallel to the rotational axis A2. The machining of the hole 31 by moving the turning tool 1 in a third feed direction F3, opposite to the first feed direction F1, such that the second rearward cutting edge 215 is active and such that at least a portion of the first inner surface 32, formed by the first nose cutting edge 105, is cut. As the turning tool 1 is moved in the third feed direction F3, in a direction out of the hole 31, a second inner surface 33 is formed by the second nose cutting edge 206, the second inner surface 33 having a greater diameter than the first inner surface 32. The third feed direction F3 is a linear motion. The depth of cut during cutting in the third feed direction F3 is preferably smaller than during cutting in the first feed direction F1.

The step of machining the hole 31 in the third feed direction F3 comprises:
- setting a second cutting depth of the second cutting insert 200, wherein the second cutting depth is shorter than the first set cutting depth of the first cutting insert 100;

Herein the second inner surface 33 of the hole 31 is formed by moving the second nose cutting edge 206 of the second cutting insert 200 over the first inner surface 32 in the third feed direction F3, at the set second cutting depth, wherein the third feed direction F3 is opposite to the first feed direction F1.

According to an example a first cutting speed for machining with the first cutting insert at the set first cutting depth is set. According to an example a second cutting speed for machining with the second cutting insert 200 at the set second cutting depth is set.

The second cutting depth may be 0,1-3,0 mm.

As seen in Fig. 13d said movement is stopped as the turning tool 1 is completely outside the hole 31 by an axial distance D4. The axial distance D4 may be 5-20mm.

According to an example the method comprises a further step in which the turning tool 1 is moved without cutting in a fourth feed direction F4, opposite to or substantially opposite to the first feed direction F1, such that the turning tool 1 is able to pull out chips (not shown) out of the hole 31. The longitudinal axis A1 of the turning tool 1 is parallel to the rotational axis A2 during the step.

According to one example the turning tool 1 is positioned such that the first radially distal point 110 is spaced apart, preferably by a distance of 0.4 - 3 mm, from the first machined surface 32.

According to an example the first feed direction F1 step is performed first. Preferably, the next step is the second feed direction F2 step, which in turn is preferably followed by the third feed direction F3 step.

According to an example the first feed direction F1 step is performed first. Preferably, the next step is the fourth feed direction F4 step, preferably followed by the second feed direction F2 step, which in turn is preferably followed by the third feed direction F3 step.

Although the turning tool 1 described is preferably used for internal turning, it may also be used for other types of turning, such as external turning and facing. In other words, the turning tool 1 is a versatile turning tool.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward", "front", "rearward" and "rear" refer to features as shown in the current drawings and as perceived by the skilled person.

## Claims

1. A turning tool (1) comprising a tool body (2), the tool body (2) including
- a front end (4) and an opposite rear end (3);
- a peripherical surface (9) connecting the front end (4) and the rear end (3);
- a longitudinal central axis (A1) extending from the front end (4) to the rear end (3), **characterized in that**
the turning tool (1) further comprises:
- a first cutting insert (100), which is arranged at the front end (4), wherein the first cutting insert (100) is a roughing cutting insert, and wherein the first cutting insert (100) has a first nose cutting edge (105) comprising a first radially distal point (110);
- a second cutting insert (200), which is arranged at the front end (4), wherein the second cutting insert (200) is a profiling cutting insert, and wherein the second cutting insert (200) has a second nose cutting edge (206) comprising a second radially distal point (210);
- wherein, as seen in the longitudinal direction, the first radially distal point (110) is positioned closer to the front end (4) than the second radially distal point (210).

2. The turning tool (1) according to claim 1, wherein the first nose cutting edge (105) is formed to remove metal at a cutting depth of 0,25-4,0 mm.

3. The turning tool (1) according to claim 1 or 2, wherein the first nose cutting edge (105) has a first nose angle (ε), which is 30-160 °.

4. The turning tool (1) according to any one of the preceding claims, wherein the second nose cutting edge (206) is formed to remove metal at a cutting depth of 0,1-3,0 mm.

5. The turning tool (1) according to any one of the preceding claims, wherein the second nose cutting edge (206) has a second nose angle (ζ), which is 35-60 °.

6. The turning tool (1) according to any one of the preceding claims, wherein a first distance (D1) from the first radially distal point (110) to the longitudinal central axis (A1) is shorter than a second distance (D2) from the second radially distal point (210) to the longitudinal central axis (A1).

7. The turning tool (1) according to any one of the preceding claims, wherein a third distance (D3) from the first radially distal point (110) to the second radially distal point (210), as seen in the longitudinal direction, is 1-20 mm, preferably 5-10 mm.

8. The turning tool (1) according to any one of the preceding claims, wherein
- the first radially distal point (110) has an associated first rake face (116);
- the second radially distal point (210) has an associated second rake face (217);
- the first rake face (116) of the first cutting insert (100) and the second rake face (217) of the second cutting insert (200) are facing different directions.

9. The turning tool according to any one of the preceding claims, wherein
- the first cutting insert (100) has a first rearward cutting edge (114) forming an acute first back clearance angle (γ), which is 4-40 °, and
- the first cutting insert (100) has a first forward cutting edge (112) forming an acute first entering angle (α), which is 4 - 40 °.

10. The turning tool (1) according to any one of the preceding claims, wherein
- the second cutting insert (200) has a second forward cutting edge (213) forming an obtuse second back clearance angle (β), which is 91 - 120 °; and
- the second cutting insert (200) has a second rearward cutting edge (215) forming an acute second entering angle (δ), which is 4 - 80 °.

11. A machining method comprising the steps of:
- providing a turning tool (1) according to any one of the preceding claims;
- providing a metal workpiece (18) comprising a hole (31), which hole (18) has a longitudinal central axis (A2) and an inner circumferential surface (29);
- arranging the longitudinal central axis (A1) of the turning tool (1) and the longitudinal central axis (A2) of the hole (31) parallel, or substantially parallel;
- rotating the metal workpiece (18) in a rotational direction (R1) around the rotational axis (A2) thereof;
- machining the hole (31), comprising the steps of:
- setting a first cutting depth of the first cutting insert (100);
- forming a first inner surface (32) of the hole (31) by moving the first nose cutting edge (105) of the first cutting insert (100) in a first feed direction (F1) over the inner circumferential surface at the set first cutting depth.

12. The machining method according to claim 11, wherein the step of providing the metal workpiece comprises:
- providing a metal workpiece (18) with a hole (31), wherein the hole (31) has an initial entrance diameter which is shorter than, as seen in a radial direction, a distance from the first radially distal point (110) to the second radially distal point (210).

13. The machining method according to claim 12, wherein the step of machining the hole (31) comprises:
- forming a clearance space between the second radially distal point (110) and the first inner surface (32) by setting the first cutting depth of the first cutting insert (100) such that a clearance space between the second radially distal point (110) and the first inner surface (32) is formed during forming the first inner surface (32).

14. The machining method according to any one of claims 11-13, wherein the step of machining the hole (31) comprises:
- bringing the second nose cutting edge (206) to an active position by moving the turning tool (1) in a second feed direction (F2), which second feed direction (F2) is inclined in relation to the rotational axis (A2).

15. The machining method according to any one of claims 11-14, wherein the step of machining the hole (31) comprises:
- setting a second cutting depth of the second cutting insert (200), wherein the second cutting depth is shorter than the first set cutting depth of the first cutting insert (100);
- forming a second inner surface (33) of the hole (31) by moving the second nose cutting edge (206) of the second cutting insert (200) over the first inner surface (32) in a third feed direction (F3), at the set second cutting depth, wherein the third feed direction (F3) is opposite to the first feed direction (F1).

16. The machining method according to claim 15, wherein the step of machining the hole (31) comprises:
- setting a first cutting speed for machining with the first cutting insert (100) at the set first cutting depth; and
- setting a second cutting speed for machining with the second cutting insert (200) at the set second cutting depth.

17. The machining method according to any one of claims 11- 16, wherein the step of providing the metal workpiece (18) comprises:
- providing a metal workpiece (18) with the hole (31), which hole (31) is a blind hole being deeper than a maximal possible hole insertion length of the turning tool (1), or which hole (31) is a through hole.

18. The machining method according to any one of claims 11- 17, further comprising the steps of:
- providing a computerized numerical control lathe;
- clamping the metal workpiece by the computerized numerical control lathe;
- connecting the turning tool (1) to a machine interface of the computerized numerical control lathe.

19. A computer program having instructions which when executed by the computer numerical control lathe cause the computer numerical control lathe to perform the method according to any one of claims 11 - 18.
